# EUROPÄISCHE PATENTSCHRIFT

(11) **EP 4 056 421 B1**
(45) Veröffentlichungstag und Bekanntmachung des Hinweises auf die Patenterteilung: **27.05.2026**
(21) Anmeldenummer: 22161060.3
(22) Anmeldetag: 09.03.2022
(51) Int. Cl.: B60P 7/13

(54) **VORRICHTUNG, SYSTEM UND VERFAHREN ZUM SICHERN VON WECHSELAUFBAUTEN UNTERSCHIEDLICHER BAUART AUF EINEM TRÄGERRAHMEN EINES FAHRZEUGANHÄNGERS**
DEVICE, SYSTEM AND METHOD FOR SECURING INTERCHANGEABLE STRUCTURES OF DIFFERENT DESIGNS ON A SUPPORT FRAME OF A VEHICLE TRAILER
DISPOSITIF, SYSTÈME ET PROCÉDÉ DE FIXATION DE CAISSES MOBILES DE CONCEPTION DIFFÉRENTE SUR UN CHÂSSIS PORTEUR D'UNE REMORQUE DE VÉHICULE

(30) Priorität: 10.03.2021 DE 102021105840
(43) Veröffentlichungstag der Anmeldung: 14.09.2022
(73) Patentinhaber: Kögel Trailer GmbH, 89349 Burtenbach (DE)
(72) Erfinder: MÜLLER, Michael, 86470 Thannhausen (DE)
(74) Vertreter: Meissner Bolte Partnerschaft mbB

(56) Entgegenhaltungen:
- EP-A1- 1 621 399
- DE-C1- 19 638 963
- DE-T2- 69 300 879

## Beschreibung

Die Erfindung betrifft eine Vorrichtung zum Sichern von Wechselaufbauten unterschiedlicher Bauart, insbesondere Wechselbrücken oder Transportcontainern, auf einem Trägerrahmen eines Fahrzeuganhängers gemäß dem Oberbegriff des Patentanspruchs 1. Ferner betrifft die Erfindung ein System zum Sichern von Wechselaufbauten, die Verwendung desselben sowie ein Verfahren zum Sichern eines Wechselaufbaus auf einem Trägerrahmen eines Fahrzeuganhängers. Die Erfindung befasst sich außerdem mit einem Sicherungselement und einem Frontbalken für einen Trägerrahmen eines Fahrzeuganhängers, die zum Sichern von Wechselaufbauten vorgesehen sind. Eine Vorrichtung zum Sichern von Wechselaufbauten der eingangs genannten Art ist beispielsweise aus DE 100 47 093 A1, DE 693 00 879 T2 oder EP 1 621 399 A1 bekannt.

Für den Transport von Gütern werden oft Transportcontainer oder Wechselbrücken eingesetzt, die nach dem ISO-Standard gestaltet sind. Derartige Wechselaufbauten weisen üblicherweise Eckbeschläge bzw. Verriegelungsaufnahmen auf, mit welchen die Wechselaufbauten auf Transportfahrzeuge, beispielsweise Fahrzeuganhängern, fixiert werden. Dazu weisen die entsprechenden Trägerrahmen der Transportfahrzeuge Sicherungseinrichtungen auf, mit welchen die Wechselaufbauten formschlüssig am Trägerrahmen gehalten werden können. Derartige Sicherungseinrichtungen, die weitverbreitet sind, werden als Twistlock-Verriegelung bezeichnet. Eine Twistlock-Verriegelung umfasst im Wesentlichen einen Zapfen, dessen pilzförmige Spitze drehbar ist, um einen Eckbeschlag eines Wechselaufbaus zu hintergreifen, so dass eine formschlüssige Verbindung zwischen der Twistlock-Verriegelung und dem Wechselaufbau in vertikaler Richtung erreicht wird.

Für den Gütertransport werden Wechselaufbauten mit unterschiedlichen Dimensionen eingesetzt. Größere Standard-ISO-Wechselaufbauten weisen eine Länge von 45 Fuß (45' bzw. 13,716 m) auf. Derartige Wechselaufbauten werden auf der Straße üblicherweise mit Sattelanhängern transportiert. Dazu werden die Wechselaufbauten heckseitig und frontseitig mit dem Trägerrahmen des Sattelaufliegers bzw. Sattelanhängers formschlüssig verbunden. Dazu kommen die eingangs bereits erwähnten Twistlock-Verriegelungen zum Einsatz. Der Trägerrahmen weist dazu üblicherweise einen Heckbalken und einen Frontbalken auf, wobei die Twist-lock-Verriegelungen am Frontbalken und am Heckbalken angebracht sind. Der Wechselaufbau wird auf den Frontbalken und den Heckbalken aufgelegt und mittels der Twistlock-Verriegelungen formschlüssig fixiert.

Um mehr Güter transportieren zu können, gibt es jedoch weiterhin sogenannte High-Cube-Wechselaufbauten, die im Vergleich zu Standard-ISO-Wechselaufbauten ein größeres Transportvolumen bieten, weil sie gegenüber Standard-ISO-Wechselaufbauten eine größere Laderaumhöhe aufweisen. Diese High-Cube-Wechselaufbauten werden in unterschiedlichen Längen angeboten. Ein besonders großes Transportvolumen erreichen dabei die 45'-High-Cube-Wechselaufbauten.

Die größere Laderaumhöhe der High-Cube-Wechselaufbauten hat den Nachteil, dass diese Wechselaufbauten die in Europa zulässige Gesamthöhe des Nutzfahrzeugs überschreiten würden, wenn sie wie Standard-Wechselaufbauten auf Frontbalken und Heckbalken eines Fahrzeuganhängers aufgelegt werden. Daher weisen High-Cube-Wechselaufbauten im vorderen Bereich einen zentralen bodenseitigen Tunnel auf, der einen Rahmenhals des Trägerrahmens des Fahrzeuganhängers aufnehmen kann. Weil der Rahmenhals auf diese Weise in den Tunnel eingreift, können High-Cube-Wechselaufbauten tiefer auf dem Trägerrahmen aufgesetzt werden, so dass die Gesamthöhe des Nutzfahrzeugs, die gesetzlich vorgeschrieben ist, nicht überschritten wird.

Bei solchen High-Cube-Wechselaufbauten können die vorderen Eckbeschläge jedoch nicht mehr auf den Frontbalken aufgesetzt werden. Vielmehr ist der Frontbalken nach vorne zu verschieben, um den High-Cube-Wechselaufbau tief genug auf dem Trägerrahmen platzieren zu können. Deswegen weisen Fahrzeuganhänger, die auch High-Cube-Wechselaufbauten aufnehmen sollen, üblicherweise am Frontbalken einen weiteren Verriegelungsmechanismus auf, der einen beweglichen Zapfen umfasst, der horizontal von vorne in die Eckbeschläge eingreifen kann. Der Frontbalken liegt also an der Vorderwand des Wechselaufbaus an, wobei bei horizontal zur Heckseite des Trägerrahmens bewegliche Bolzen in den Eckbeschlag des Wechselaufbaus eingreifen, so dass auch bei High-Cube-Wechselaufbauten ein Formschluss in horizontaler und vertikaler Richtung gewährleistet ist.

Die gesetzlichen Rahmenbedingungen für die Sicherung von Wechselaufbauten auf Fahrzeugen sehen vor, dass auf Landfahrzeugen eine Sicherung der Wechselaufbauten jedenfalls in horizontaler Richtung zwingend erforderlich ist. Für den Transport von Fahrzeugen oder Fahrzeuganhängern mit Wechselaufbauten als Ladung auf Schiffen (RoRo-Transport) wird gesetzlich außerdem gefordert, dass eine Sicherung des Wechselaufbaus in vertikaler Richtung erfolgt, um den Rollbewegungen eines Schiffes aufgrund des Wellengangs Rechnung zu tragen. Alle vorgenannten Anforderungen werden durch die Twistlock-Verriegelungen erreicht, die den Wechselaufbau formschlüssig in alle Raumrichtungen auf den Trägerrahmen eines Fahrzeuganhängers halten.

Insofern ist erkennbar, dass bei Trägerrahmen von Fahrzeuganhängern, die sowohl Standard-Wechselaufbauten, als auch High-Cube-Wechselaufbauten aufnehmen sollen, eine besonders aufwändige Verriegelungsmechanik im Bereich des Frontbalkens erforderlich ist. Für den Standard-Wechselaufbau ist eine Verriegelungsmechanik notwendig, die in den Eckbeschlag des Wechselaufbaus vertikal eingreift, während für den High-Cube-Wechselaufbau eine Verriegelungsmechanik notwendig ist, die horizontal in den Eckbeschlag eingreift.

Die eingangs genannte DE 100 47 093 A1 zeigt eine derart aufwändig gestaltete Sicherungseinrichtung für einen Trägerrahmen eines Fahrzeuganhängers, die sowohl eine Twistlock-Verriegelung zur Sicherung von Standard-ISO-Wechselaufbauten, als auch eine als Front-Locking-Pin bezeichneten, beweglichen Zapfen zur Sicherung von High-Cube-Wechselaufbauten aufweist. Die bekannte Sicherungseinrichtung ist mechanisch aufwändig, wartungsbedürftig und in der Herstellung teuer.

Eine weitere Problematik ergibt sich dadurch, dass durch die Länge eines 45'-Wechselaufbaus der Durchschwenkradius zwischen einer Sattelzugmaschine und einem Sattelauflieger reduziert wird. Die aufwändige Mechanik, die im Frontbalken erforderlich ist, um sowohl Standard-Wechselaufbauten als auch High-Cube-Wechselaufbauten aufzunehmen, muss folglich auf geringem Raum untergebracht werden, da der Frontbalken sonst an seinen Längsenden zu groß wird und so den gesetzlich vorgeschriebenen Durchschwenkradius überschreitet. Das beeinträchtigt die Benutzerfreundlichkeit der Verriegelungseinrichtungen. In der Praxis ist es außerdem aufwändig, alle Verriegelungen am Trägerrahmen zu betätigen, um einen Wechselaufbau zu sichern. Diese zusätzlichen Handgriffe, die insbesondere für den Formschluss zwischen dem Trägerrahmen und dem Wechselaufbau in vertikaler Richtung erforderlich sind, erfordern einen zusätzlichen Zeitaufwand, der die Effizienz des Speditionsgewerbes beeinträchtigt.

Vor diesem Hintergrund ist es Aufgabe der Erfindung, einen Tragrahmen eines Fahrzeuganhängers mit einer Vorrichtung zur Sicherung von Wechselaufbauten auf dem Tragrahmen bereitzustellen, die besonders einfach bedienbar ist und alle gesetzlichen Erfordernisse zur Ladungssicherung erfüllt.

Erfindungsgemäß wird die vorgenannte Aufgabe durch den Gegenstand des Patentanspruchs 1 gelöst.

Patentanspruch 11 bezieht sich auf der Verwendung eines Trägerrahmens nach Patentanspruch 1. Patentanspruch 12 bezieht sich auf ein Verfahren zum Sichern eines Wechselaufbaus auf einem Trägerrahmen nach Patentanspruch 1.

So beruht die Erfindung auf dem Gedanken, eine Vorrichtung zum Sichern von Wechselaufbauten unterschiedlicher Bauart, insbesondere Wechselbrücken oder Transportcontainern, auf einem Trägerrahmen eines Fahrzeuganhängers anzugeben, wobei der Trägerrahmen wenigstens eine heckseitige Sicherungseinrichtung und wenigstens eine frontseitige Sicherungseinrichtung aufweist. Die heckseitige Sicherungseinrichtung ist so angepasst, dass zur Sicherung eines Wechselaufbaus auf dem Trägerrahmen ein Formschluss in horizontaler und in vertikaler Richtung herstellbar ist. Die Erfindung zeichnet sich dadurch aus, dass die frontseitige Sicherungseinrichtung so angepasst ist, dass zur Sicherung des Wechselaufbaus ein Formschluss ausschließlich in horizontaler Richtung herstellbar ist.

Bei der Erfindung ist also vorgesehen, den Aufwand zur Sicherung von Wechselaufbauten auf Fahrzeugträgerrahmen dadurch zu reduzieren, dass eine formschlüssige Verriegelung in vertikaler Richtung nicht durchgeführt wird. Vielmehr ist die Vorrichtung so angepasst, dass eine solche Verriegelung nicht möglich ist.

Es hat sich gezeigt, dass es zur Erfüllung der gesetzlichen Anforderungen für den Transport von Wechselaufbauten auf Fahrzeuganhängern sowohl im Straßenverkehr, als auch im kombinierten Schiffsverkehr ausreicht, wenn eine formschlüssige Sicherung des Wechselaufbaus auf dem Trägerrahmen in horizontaler Richtung erfolgt. Die für den Schiffsverkehr relevanten vertikalen Sicherungsmaßnahmen können hingegen kraftschlüssig erreicht werden, wobei die Gewichtskraft des Wechselaufbaus ausreicht, um die gesetzlichen Grenzwerte zu erfüllen. Mit anderen Worten beruht die Erfindung auf der Idee, bisher vorherrschend verwendete Technologie einer Twistlock-Verriegelung, die sich dadurch auszeichnet, durch eine Mechanik einen Formschluss zwischen dem Trägerrahmen und dem Wechselaufbau auch in vertikaler Richtung zu erreichen, so zu vereinfachen, dass keinerlei manuelle Betätigung mehr notwendig ist. Vielmehr reicht es zu Erfüllung der gesetzlichen Anforderungen aus, wenn die formschlüssige Sicherung des Wechselaufbaus in ausschließlich horizontaler Richtung erfolgt, also eine Sicherung in Fahrtrichtung und quer zur Fahrtrichtung erreicht wird.

Insbesondere kann bei der Erfindung also vorgesehen sein, dass die frontseitige Sicherungseinrichtung so angepasst ist, dass der Wechselaufbau in vertikaler Richtung frei beweglich ist. Durch den Verzicht auf einen Formschluss in vertikaler Richtung erlaubt die frontseitige Sicherungseinrichtung also eine vertikale Beweglichkeit zwischen dem Trägerrahmen und dem Wechselaufbau. Dabei hat sich in Fahrversuchen mit derart gestalteten Fahrzeuganhängern gezeigt, dass die Gewichtskraft des Wechselaufbaus ausreicht, um den Wechselaufbau auf dem Trägerrahmen zu halten, jedenfalls bei vertikalen Beschleunigungswerten, die unterhalb der gesetzlichen Grenzwerte liegen.

Um im Bereich der frontseitigen Sicherungseinrichtung den Formschluss in ausschließlich horizontaler Richtung zu erreichen, kann vorgesehen sein, dass die frontseitige Sicherungseinrichtung einen Frontanschlag und/oder zwei Queranschläge bildet. Damit ist gewährleistet, dass der Wechselaufbau in Fahrtrichtung und quer zur Fahrtrichtung formschlüssig auf dem Trägerrahmen gesichert ist.

Die Queranschläge können dabei durch einen Rahmenhals des Trägerrahmens gebildet sein. Dies gilt insbesondere für den Transport von High-Cube-Wechselaufbauten, die einen Tunnel aufweisen. Um die gesetzlich zugelassene Maximalhöhe eines Fahrzeuganhängers mit einem Wechselaufbau nicht zu überschreiten, greift bei solchen High-Cube-Wechselaufbauten der Rahmenhals des Trägerrahmens in den Tunnels des Wechselaufbaus ein, der im Frontbereich des Wechselaufbaus in den Boden eingelassen ist. Der Rahmenhals kommt so zwischen den Tunnelwänden des Tunnels des High-Cube-Wechselaufbaus zu liegen und bildet dadurch zwei Queranschläge, die ein seitliches Verrutschen des High-Cube-Wechselaufbaus verhindern. Insofern besteht ein Formschluss quer zur Fahrtrichtung zwischen den Tunnelwänden des Wechselaufbaus und dem Rahmenhals des Trägerrahmens des Fahrzeuganhängers.

Um eine formschlüssige Sicherung in Fahrtrichtung für High-Cube-Wechselaufbauten zu erreichen, ist bevorzugt vorgesehen, dass der Frontanschlag durch einen Querbalken, insbesondere einen Frontbalken, des Trägerrahmens gebildet ist. Auf diese Weise ist sichergestellt, dass der High-Cube-Wechselaufbau bei einem Bremsvorgang in seiner Position auf dem Fahrzeuganhänger bleibt. Die Vorderwand des Wechselaufbaus liegt also am Frontbalken an, so dass hier eine formschlüssige Sicherung in Fahrtrichtung besteht.

Eine formschlüssige Sicherung entgegen der Fahrtrichtung kann weiterhin über die heckseitigen Eckbeschläge und eine heckseitige Sicherungseinrichtung des Trägerrahmens erreicht werden. Die heckseitige Sicherungseinrichtung kann beispielsweise starre Sicherungsbolzen aufweisen oder eine Twistlock-Verriegelung, wobei die Sicherungsbolzen und/oder die Twistlock-Verriegelung vertikal in die Eckbeschläge des High-Cube-Wechselaufbaus eingreifen.

Um hingegen mit der frontseitigen Sicherungseinrichtung Standard-Wechselaufbauten zu sichern, die eine gegenüber den High-Cube-Wechselaufbauten geringere Aufbauhöhe aufweisen, kann bevorzugt vorgesehen sein, dass der Querbalken zusätzlich wenigstens einen vertikalen, insbesondere starren, Sicherungsbolzen aufweist, dessen vertikaler Eingriff in eine Verriegelungsaufnahme des Wechselaufbaus angepasst ist. Die Verriegelungsaufnahme kann insbesondere ein Eckbeschlag sein. Wie eingangs bereits erwähnt wurde, werden Standard-Wechselaufbauten, insbesondere 45'-Standard-Wechselaufbauten, so auf dem Trägerrahmen positioniert, dass eine formschlüssige Sicherung durch vertikalen Eingriff von Sicherungselementen in die Eckbeschläge erfolgt. Um eine solche Gestaltung auch bei der Erfindung zu realisieren, ist in einer bevorzugten Ausführungsform der Querbalken mit einem zusätzlichen Sicherungsbolzen versehen. Der Sicherungsbolzen kann vertikal nach oben ausgerichtet sein, so dass der Wechselaufbau auf den Querbalken aufgesetzt werden, wobei der Sicherungsbolzen vertikal in den Eckbeschlag eingreifen. So gewährleistet der Sicherungsbolzen eine formschlüssige Sicherung in alle horizontalen Richtungen, nämlich in Fahrtrichtung, entgegen der Fahrtrichtung und quer zur Fahrtrichtung.

Eine solche Gestaltung des Querbalkens bzw. Frontbalkens der frontseitigen Sicherungseinrichtung ist besonders vorteilhaft, da auf diese Weise sowohl 45'-High-Cube-Wechselaufbauten mit Tunnel, als auch 45'-Standard-Wechselaufbauten ohne Tunnel in horizontaler Richtung formschlüssig gesichert werden können. Während die formschlüssige Sicherung in horizontaler Richtung bei High-Cube-Wechselaufbauten durch den in den Tunnel eingreifenden Rahmenhals des Trägerrahmens als Queranschlag und den Querbalken, insbesondere Frontbalken, des Trägerrahmens als Frontanschlag gebildet wird, erfolgt die formschlüssige Sicherung in horizontaler Richtung bei 45'-Standard-Wechselaufbauten durch den Sicherungsbolzen, der auf dem Querbalken aufgebracht ist. So können mit wenigen, sehr einfachen Bauteilen, insbesondere ohne eine aufwändige Betätigungsmechanik, im Wesentlichen alle Arten von Wechselaufbauten mit der frontseitigen Sicherungseinrichtung effizient auf einem Trägerrahmen gesichert werden. Insofern zeichnet sich die Erfindung durch eine hohe Modularität bei geringem Bedienungsaufwand, geringem Wartungsaufwand und geringen Herstellungskosten aus.

Um sicherzugehen, dass der Wechselaufbau auch in vertikaler Richtung gesichert ist, kann vorgesehen sein, dass die heckseitige Sicherungseinrichtung so angepasst ist, dass ein Formschluss in horizontaler und zusätzlich in vertikaler Richtung herstellbar ist. Beispielsweise können an der heckseitigen Sicherungseinrichtung Twistlock-Verriegelungen angebracht sein, die auch einen vertikalen Formschluss ermöglichen. Für die heckseitige Sicherungseinrichtung des Fahrzeuganhängers bestehen weniger hohe Anforderungen im Hinblick auf den Bauraumbedarf, weil es am Heck des Fahrzeugs nicht auf einen Durchschwenkradius ankommt. Die Sicherungselemente der heckseitigen Sicherungseinrichtung können daher vergleichsweise einfach ausgeführt werden. Eine solche zusätzlich formschlüssige Sicherung des Wechselaufbaus in vertikaler Richtung ermöglicht die Verwendung der Erfindung auch in Ländern, die an die Ladungssicherung von Wechselaufbauten höhere Anforderungen stellen.

Ein nebengeordneter Aspekt der Erfindung betrifft ein System zum Sichern von Wechselaufbauten, insbesondere Wechselbrücken und/oder Transportcontainern, insbesondere ISO-Containern, unterschiedlicher Größe auf einem Trägerrahmen eines Fahrzeuganhängers. Das System weist wenigstens eine heckseitige Sicherungseinrichtung und wenigstens eine frontseitige Sicherungseinrichtung auf, die jeweils eine formschlüssige Verbindung zwischen dem jeweiligen Wechselaufbau und dem Trägerrahmen bewirken. Die frontseitige Sicherungseinrichtung ist erfindungsgemäß so ausgebildet, dass deren formschlüssige Verbindung ausschließlich in horizontaler Richtung herstellbar ist.

Die im Zusammenhang mit der zuvor beschriebenen Vorrichtung genannten Vorteile und bevorzugten Weiterbildungen gelten entsprechend auch für das hier beschriebene System.

So kann in bevorzugter Ausgestaltung des Systems vorgesehen sein, dass die frontseitige Sicherungseinrichtung keine formschlüssige Verbindung in vertikaler Richtung bewirkt oder bewirken kann. Die erfindungsgemäß erwünschte Vereinfachung wird gerade dadurch erreicht, dass auf eine solche formschlüssige Sicherung in vertikaler Richtung verzichtet wird. Insofern ist auch das System bevorzugt so ausgestaltet, dass eine solche formschlüssige Verbindung in vertikaler Richtung nicht hergestellt werden kann.

Bei einer besonders bevorzugten Ausführungsform des erfindungsgemäßen Systems ist vorgesehen, dass die frontseitige Sicherungseinrichtung wenigstens einen Frontanschlag und zwei Queranschläge zur Sicherung eines High-Cube-Wechselaufbaus sowie einen Sicherungsbolzen zum Eingriff in eine Verriegelungsaufnahme eines Standard-ISO-Wechselaufbaus aufweist, wobei
- der Frontanschlag angepasst ist, um mit einer Vorderwand des High-Cube-Wechselaufbaus eine formschlüssige Sicherung in einer Fahrtrichtung nach vorne zu bilden,
- die Queranschläge angepasst sind, um mit Seitenwänden eines bodenseitigen Tunnels des High-Cube-Wechselaufbaus eine formschlüssige Sicherung quer zu einer Fahrtrichtung zu bilden und
- der Sicherungsbolzen angepasst ist, um mit der Verriegelungsaufnahme des Standard-ISO-Wechselaufbaus eine formschlüssige Sicherung in einer Fahrtrichtung und quer zu einer Fahrtrichtung zu bilden.

Das erfindungsgemäße System bietet eine hohe Flexibilität bei der Auswahl der zu transportierenden Wechselaufbauten. Insbesondere können wahlweise High-Cube-Wechselaufbauten und Standard-ISO-Wechselaufbauten mit dem System auf einem Trägerrahmen gesichert werden. Dabei werden weiterhin alle gesetzlichen Anforderungen erfüllt und zeitgleich die Benutzerfreundlichkeit des Systems verbessert. Insbesondere wird vermieden, dass in aufwändiger Weise eine Verriegelung zu betätigen ist, um einen Formschluss in vertikaler Richtung herzustellen.

Bevorzugt ist es, wenn die frontseitige Sicherungseinrichtung zwei Sicherungsbolzen aufweist, die jeweils angepasst sind, um mit je einer Verriegelungsaufnahme des Standard-ISO-Wechselaufbaus eine formschlüssige Sicherung in einer Fahrtrichtung und quer zu einer Fahrtrichtung zu bilden.

Ein weiterer Aspekt der Erfindung betrifft einen Trägerrahmen eines Fahrzeuganhängers mit einer zuvor beschriebenen Vorrichtung oder einem zuvor beschriebenen System. Solche Trägerrahmen lassen sich besonders einfach und kostengünstig herstellen, da auf eine besonders aufwändige Mechanik für die Vorrichtung oder das System zum Sichern von Wechselaufbauten verzichtet werden kann. Ein Formschluss in rein horizontaler Richtung wird mit erheblich einfacheren Mitteln erreicht, so dass auf die bisherigen aufwändigen Verriegelungen, wie Twistlock-Verriegelungen oder horizontal bewegliche Zapfen (Front-Locking-Pins) verzichtet werden kann.

Im Rahmen der vorliegenden Anmeldung wird außerdem eine Verwendung einer Sicherungseinrichtung eines zur Aufnahme von unterschiedlichen Wechselaufbauten, insbesondere Wechselbrücken oder Transportcontainern, vorzugsweise unterschiedlicher ISO-Container, ausgebildeten Trägerrahmens zur formschlüssigen Verbindung eines Wechselaufbaus mit dem Trägerrahmen in ausschließlich horizontaler Richtung, insbesondere nicht in vertikaler Richtung, offenbart und beansprucht.

Im Rahmen eines nebengeordneten Aspekts betrifft die Erfindung die Verwendung eines Systems, das zum Sichern von Wechselaufbauten, insbesondere Wechselbrücken oder Transportcontainern, insbesondere ISO-Containern, auf einem Trägerrahmen ausgebildet ist und wenigstens eine heckseitige Sicherungseinrichtung und eine frontseitige Sicherungseinrichtung aufweist, wobei mit der heckseitigen Sicherungseinrichtung eine formschlüssige Verbindung mit dem Wechselaufbau in drei Raumrichtungen und mit der frontseitigen Sicherungseinrichtung eine formschlüssige Verbindung mit dem Wechselaufbau in höchstens zwei, insbesondere ausschließlich horizontalen, Raumrichtungen hergestellt wird. Insbesondere kann das zuvor beschriebene System zum Sichern von Wechselaufbauten unterschiedlicher Größe auf einem Trägerrahmen eines Fahrzeuganhängers auf diese Weise verwendet werden.

Bei einer bevorzugten Ausgestaltung der erfindungsgemäßen Verwendung eines Systems zum Sichern von Wechselaufbauten ist vorgesehen, dass im Bereich der frontseitigen Sicherungseinrichtung das Sichern des Wechselaufbaus auf dem Trägerrahmen in vertikaler Richtung ausschließlich durch einen Kraftschluss, insbesondere durch die Gewichtskraft des Wechselaufbaus, erfolgt.

Die Erfindung betrifft auch die Verwendung einer frontseitigen Sicherungseinrichtung eines Trägerrahmens zur Aufnahme von Wechselaufbauten, insbesondere Wechselbrücken oder Transportcontainern, zur Sicherung eines Wechselaufbaus auf dem Trägerrahmen mittels einer formschlüssigen Verbindung, wobei eine Sicherung des Wechselaufbaus mittels der frontseitigen Sicherungseinrichtung auf dem Trägerrahmen in vertikaler Richtung, insbesondere ausschließlich, durch einen Kraftschluss, insbesondere durch die Gewichtskraft des Wechselaufbaus, erfolgt. Der Trägerrahmen kann vorzugsweise mit einer zuvor beschriebenen Vorrichtung oder einem zuvor beschriebenen System ausgestattet sein.

Im Rahmen der Anmeldung wird außerdem ein Ladungssicherungsverfahren offenbart und beansprucht. Das hier beschriebene Verfahren zum Sichern eines Wechselaufbaus, insbesondere einer Wechselbrücke oder eines Transportcontainers, insbesondere eines ISO-Containers, auf einem Trägerrahmen eines Fahrzeuganhängers, insbesondere eines zuvor beschriebenen Trägerrahmens, sieht vor, dass der Wechselaufbau mit einer heckseitigen Sicherungseinrichtung in horizontaler und vertikaler Richtung formschlüssig mit dem Trägerrahmen und mit einer frontseitigen Sicherungseinrichtung nur in horizontaler Richtung formschlüssig mit dem Trägerrahmen verbunden wird. Wenn das Verfahren zur Ladungssicherung auf diese Weise durchgeführt wird, entsteht eine ausreichende Verbindung zwischen dem Wechselaufbau und dem Trägerrahmen, die alle gesetzlichen Erfordernisse erfüllt. Damit wird zwar auf die vertikale Sicherung mit der frontseitigen Sicherungseinrichtung verzichtet. Es hat sich jedoch gezeigt, dass dieser Verzicht nicht dazu führt, dass die gesetzlichen Bestimmungen nicht mehr eingehalten werden. Vielmehr erfolgt die Sicherung in vertikaler Richtung im Rahmen der gesetzlichen Anforderungen durch die Gewichtskraft des Wechselaufbaus.

Bei dem erfindungsgemäßen Ladungssicherungsverfahren kann in einer bevorzugten Ausführungsform vorgesehen sein, dass der Wechselaufbau im Bereich der frontseitigen Sicherungseinrichtung in vertikaler Richtung ausschließlich kraftschlüssig, insbesondere gewichtskraftschlüssig, mit dem Trägerrahmen verbunden wird.

Besonders bevorzugt ist es, wenn zur Durchführung des erfindungsgemäßen Ladungssicherungsverfahrens, also zum Sichern des Wechselaufbaus auf dem Trägerrahmen, eine eingangs beschriebene Vorrichtung zum Sichern von Wechselaufbauten unterschiedlicher Bauart oder ein eingangs beschriebenes System zum Sichern von Wechselaufbauten unterschiedlicher Größe eingesetzt wird.

Ein weiterer nebengeordneter Aspekt der Erfindung betrifft ein Sicherungselement, insbesondere frontseitiges Sicherungselement, für einen Trägerrahmen oder eines Trägerrahmens eines Fahrzeuganhängers. Der Trägerrahmen kann insbesondere ein zuvor beschriebener Trägerrahmen mit einer eingangs beschriebenen Vorrichtung oder einem eingangs beschriebenen System sein. Bei dem erfindungsgemäßen Sicherungselement ist vorgesehen, dass dieses einen Grundkörper und einen auf dem Grundkörper angeordneten Sicherungsbolzen aufweist, der zum formschlüssigen Eingriff in eine Verriegelungsaufnahme eines Wechselaufbaus, insbesondere einer Wechselbrücke oder eines Transportcontainers, insbesondere eines ISO-Containers, ausgebildet ist. Der Grundkörper kann eine Vorderfläche und eine Rückfläche aufweisen, die parallel zu einer Längsachse des Sicherungsbolzens ausgerichtet sind. Vorzugsweise ist das Sicherungselement frei von beweglichen Teilen zur Verriegelung mit einem Wechselaufbau.

Das erfindungsgemäße Sicherungselement ist also besonders einfach aufgebaut und hat damit in der praktischen Anwendung erhebliche Vorteile. Eine aufwändige Mechanik, wie sie bei aus dem Stand der Technik bekannten Twistlock-Verriegelungen erforderlich ist, ist nicht notwendig. Die Sicherung des Wechselaufbaus erfolgt bereits beim Beladen des Trägerrahmens mit dem Wechselaufbau, so dass darüber hinaus gehende Handgriffe vermieden werden. Dies stellt für Transportdienstleister eine erhebliche Erleichterung dar.

Bei einer bevorzugten Ausführungsform des erfindungsgemäßen Sicherungselements ist vorgesehen, dass die Vorderfläche zur Rückfläche hin gekrümmt ist. Da das Sicherungselement keine aufwändige Mechanik für bewegliche Teile aufweist, kann das Volumen des Sicherungselements reduziert werden. Dies kann beispielsweise dadurch erfolgen, dass die Vorderfläche zur Rückfläche hin gekrümmt ist. Dies ist deswegen vorteilhaft, weil durch die Krümmung der Vorderfläche der Durchschwenkradius eines Sattelaufliegers in Bezug auf die Sattelzugmaschine besser eingehalten werden kann. Damit ist also sichergestellt, dass sich die Zugmaschine bezüglich dem Sattelauflieger ausreichend weit drehen kann und damit das gesamte Sattelzuggespann gut manövrierbar ist.

Der Sicherungsbolzen ist vorzugsweise starr, insbesondere stoffschlüssig oder monolithisch, mit dem Grundkörper verbunden. Wie bereits mehrfach erwähnt, verzichtet das Sicherungselement auf eine Betätigungsmechanik. Der Sicherungsbolzen kann daher starr mit dem Grundkörper verbunden sein. Eine Beweglichkeit ist nicht erforderlich, um im Sinne der Erfindung eine ausschließlich horizontale Sicherung eines Wechselaufbaus auf einem Trägerrahmen zu erreichen. Damit ist das Sicherungselement besonders einfach aufgebaut und dementsprechend kostengünstig herstellbar.

Die Erfindung betrifft auch einen Frontbalken für einen Trägerrahmen eines Fahrzeuganhängers, insbesondere einen Frontbalken eines Trägerrahmens eines Fahrzeuganhängers, mit wenigstens einem zuvor beschriebenen Sicherungselement, insbesondere zwei solcher Sicherungselemente. Vorzugsweise ist das Sicherungselement für den Frontbalken so ausgestaltet, dass die Vorderfläche des Sicherungselements, insbesondere die Vorderflächen der beiden Sicherungselemente, in Fahrtrichtung nach vorne ausgerichtet sind. Damit ist sichergestellt, dass die Vorderflächen ihre Funktion wahrnehmen, nämlich den Durchschwenkradius zwischen Sattelauflieger und Zugmaschine einzuhalten.

Der Sicherungsbolzen ist vorzugsweise vertikal nach oben ausgerichtet. Dies ist zweckmäßig, um in Verriegelungsaufnahmen bzw. Eckbeschläge von auf dem Trägerrahmen aufgesetzten Wechselaufbauten einzugreifen.

Eine weitere Variante des erfindungsgemäßen Frontbalkens sieht vor, dass die Rückfläche des Sicherungselements und/oder eine Rückfläche des Frontbalkens einen Frontanschlag für einen Wechselaufbau, insbesondere einen High-Cube-Container, bildet. Der High-Cube-Container kommt wegen seines Tunnels tiefer auf dem Fahrzeugrahmen zu liegen, so dass die vorderen Eckbeschläge des High-Cube-Containers unterhalb einer horizontalen Oberfläche des Frontbalkens zu liegen kommen. Der Frontbalken liegt dann jedoch an der Vorderwand des Wechselaufbaus an und bildet so eine formschlüssige Sicherung in Fahrtrichtung. Insofern ist also vorgesehen, dass die Rückfläche des Sicherungselements und/oder die Rückfläche des Frontbalkens den Frontanschlag für den Wechselaufbau bildet.

Die Erfindung wird im Folgenden anhand eines Ausführungsbeispiels unter Bezugnahme auf die beigefügten, schematischen Zeichnungen näher erläutert. Darin zeigen:
- Fig. 1: eine Seitenansicht eines Trägerrahmens mit einer erfindungsgemäßen Vorrichtung zum Sichern von Wechselaufbauten unterschiedlicher Bauart nach einem bevorzugten Ausführungsbeispiel, wobei auf dem Trägerrahmen ein 45'-Standard-ISO-Wechselaufbau gesichert ist;
- Fig. 2: eine Seitenansicht des Trägerrahmens gemäß Fig. 1, wobei auf dem Trägerrahmen ein 45'-High-Cube-Wechselaufbau gesichert ist;
- Fig. 3: eine Seitenansicht des Trägerrahmens gemäß Fig. 1;
- Fig. 4: eine Draufsicht des Trägerrahmens gemäß Fig. 1;
- Fig. 5: eine perspektivische Ansicht eines Rahmenhalses des Trägerrahmens gemäß Fig. 1;
- Fig. 6: eine Draufsicht auf den Rahmenhals gemäß Fig. 5;
- Fig. 7: eine perspektivische Ansicht eines Sicherungselements für den Trägerrahmen gemäß Fig. 1;
- Fig. 8: eine Draufsicht auf das Sicherungselement gemäß Fig. 7; und
- Fig. 9: eine Seitenansicht des Sicherungselements gemäß Fig. 7.

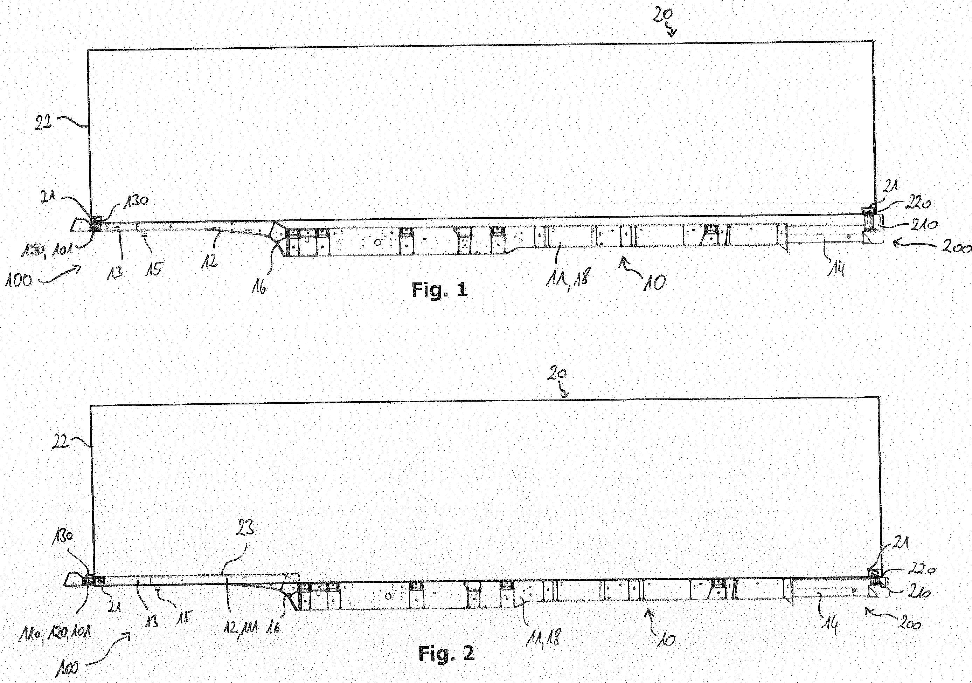

Fig. 1 zeigt einen Standard-ISO-Container auf einem Trägerrahmen 10, der nach der vorliegenden Erfindung ausgebildet ist bzw. die vorliegende Erfindung in Form einer Ladungssicherungsvorrichtung oder eines Ladungssicherungssystems umfasst.

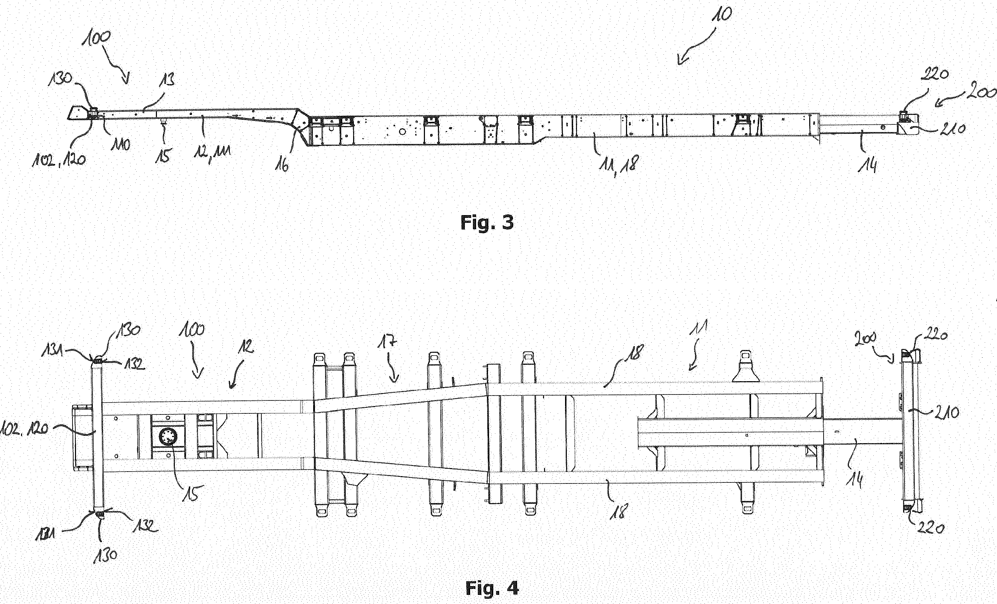

Wie in der Einzeldarstellung des Trägerrahmens 10 gemäß Fig. 3 gut zu erkennen ist, weist der Trägerrahmen 10 einen Hauptrahmen 11 und einen Rahmenhals 12 auf. Der Hauptrahmen 11 und der Rahmenhals 12 sind vorzugsweise fest, insbesondere stoffschlüssig miteinander verbunden. Heckseitig ist der Hauptrahmen 11 um einen Heckauszug 14 ergänzt, wogegen der Rahmenhals 12 frontseitig einen Frontauszug 13 aufweist. Über den Frontauszug 13 und den Heckauszug 14 ist die Länge des Trägerrahmens 10 einstellbar. In alternativen Ausführungsbeispielen kann die Länge des Trägerrahmens 10 auch dauerhaft festgelegt sein. Insbesondere kann der Rahmenhals 12 anstelle des Frontauszugs 13 einen starren Frontbalken und/oder anstelle des Heckauszugs 14 einen starren Heckbalken aufweisen.

Der Rahmenhals 12 weist einen Königszapfen 15 auf, der sich von der Unterseite des Rahmenhalses 12 nach unten erstreckt und sich zur Kupplung des Trägerrahmens mit einer Sattelzugmaschine eignet. In Fig. 3 ist auch erkennbar, dass der Rahmenhals 12 gegenüber dem Hauptrahmen 11 nach oben versetzt ist, wobei sich zwischen dem Rahmenhals 12 und dem Hauptrahmen 11 eine Kröpfung bildet. Ein solcher Rahmenhals wird auch als Gooseneck bezeichnet.

Der Trägerrahmen 10 umfasst eine heckseitige Sicherungseinrichtung 200, die im Wesentlichen am Heckauszug 14 ausgebildet ist. Dazu ist ein heckseitiger Querträger 210 vorgesehen, der zwei Twistlock-Verriegelungen 220 trägt. Die Twist-lock-Verriegelungen 220 sind über eine Schwenk- oder Klappeinrichtung höhenverstellbar, wobei in Fig. 1 die obere Position der Twistlock-Verriegelung 220 dargestellt ist.

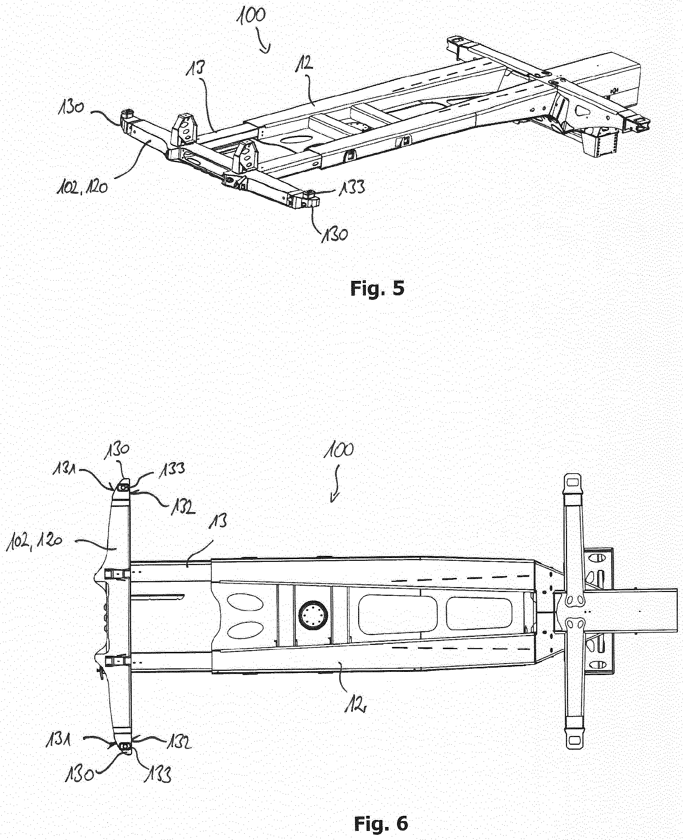

Der Trägerrahmen 10 umfasst außerdem eine frontseitige Sicherungseinrichtung 100, die im Bereich des Rahmenhalses 12 ausgebildet ist. Die frontseitige Sicherungseinrichtung 100 weist unter anderem einen Querbalken 120 auf, der als Frontbalken 102 ausgebildet ist. An den Längsenden des Frontbalkens 102 ist jeweils ein Sicherungselement 130 angeordnet (Fig. 4). Das Sicherungselement 130 umfasst einen Sicherungsbolzen 133, der sich vertikal bzw. senkrecht zur Haupterstreckungsebene des Trägerrahmens 10 erstreckt und starr mit dem Sicherungselement 130 verbunden ist (Fig. 5, Fig. 7-8). Der Sicherungsbolzen 133 kann in eine Verriegelungsaufnahme 21 eines Wechselaufbaus 20 eingreifen.

In Fig. 1 ist als Wechselaufbau 20 ein 45'-Standard-ISO-Container dargestellt. Solche Container weisen an ihren unteren Ecken jeweils Verriegelungsaufnahmen 21 auf. Die Verriegelungsaufnahmen 21 bilden insoweit Eckbeschläge, die zu einer formschlüssigen Verbindung mit einem Trägerrahmen 10 geeignet sind. In Fig. 1 ist erkennbar, dass der 45'-Standard-ISO-Container auf dem heckseitigen Querträger 210 aufliegt, so dass die Twistlock-Verriegelungen 220 vertikal in die Verriegelungsaufnahmen 21 des Wechselaufbaus 20 eingreifen.

Der 45'-Standard-ISO-Container liegt außerdem auf dem Rahmenhals 12 und dem Frontbalken 102 der frontseitigen Sicherungseinrichtung 100 auf, so dass die Sicherungsbolzen 133 der Sicherungselemente 130 vertikal in die vorderen Verriegelungsaufnahmen 21 des Wechselaufbaus 20 eingreifen. Die frontseitige Sicherungseinrichtung 100 bewirkt insofern eine formschlüssige Verbindung zwischen dem Trägerrahmen 10 und dem Wechselaufbau 20 ausschließlich in horizontaler Richtung. In vertikaler Richtung kann sich der Wechselaufbau 20 zumindest im Bereich der frontseitigen Sicherungseinrichtung 100 frei bewegen. Die vertikale Sicherung erfolgt frontseitig nur über die Gewichtskraft des Wechselaufbaus 20, die den Wechselaufbau 20 kraftschlüssig auf dem Trägerrahmen 10, insbesondere dem Rahmenhals 12, hält. Die heckseitige Sicherungseinrichtung 200 umfasst hingegen die Twistlock-Verriegelungen 220, die zum Sichern des 45'-Standard-ISO-Containers vorzugsweise in die Verriegelungsstellung überführt werden, so dass die Twistlock-Verriegelungen 220 auch in vertikaler Richtung einen Formschluss zum Wechselaufbau 20 bewirken.

Fig. 2 zeigt den Trägerrahmen 10, wobei der Trägerrahmen 10 bei diesem Ausführungsbeispiel einen Wechselaufbau 20 trägt, der als High-Cube-Container ausgebildet ist. Der High-Cube-Container unterscheidet sich von dem Standard-ISO-Container gemäß Fig. 1 dadurch, dass er eine größere Höhe aufweist und daher auf dem Hauptrahmen 11 des Trägerrahmens 10 aufliegen muss, damit die Gesamthöhe des Sattelaufliegers nicht das gesetzliche Höchstmaß überschreitet. Um dabei nicht mit dem Rahmenhals 12 zu kollidieren, weist der High-Cube-Container einen Tunnel 23 auf, in den der Rahmenhals 12 eingreifen kann. Dabei umschließt der Tunnel 23 den Rahmenhals 12 seitlich.

Um den High-Cube-Container aufzunehmen, ist der Trägerrahmen 10 verlängert, indem der Frontauszug 13 nach vorne weiter ausgezogen wird. Auf diese Weise ist der Frontbalken 102 nach vorne versetzt, so dass der High-Cube-Container an dem Frontbalken 102 vorbei nach unten auf dem Hauptrahmen 11 abgesetzt werden kann. Wie in Fig. 2 erkennbar ist, liegt dann die Vorderwand 22 des High-Cube-Containers an einer Rückfläche 132 des Frontbalkens 102 an.

Der High-Cube-Container ist auf dem Trägerrahmen 10 jedenfalls durch eine frontseitige Sicherungseinrichtung 100 und eine heckseitige Sicherungseinrichtung 200 gesichert. Die heckseitige Sicherungseinrichtung 200 umfasst wie bei dem Ausführungsbeispiel gemäß Fig. 1 den heckseitigen Querträger 110 und die darauf angeordneten Twistlock-Verriegelungen 220. Zur Aufnahme des High-Cube-Containers sind die Twistlock-Verriegelungen 220 am heckseitigen Querträger 210 jedoch in eine untere Stellung verschwenkt oder verkippt. Die Twistlock-Verriegelungen 220 greifen jedoch in die Eckbeschläge bzw. Verriegelungsaufnahmen des High-Cube-Containers ein und fixieren diesen formschlüssig zumindest in horizontaler Richtung, vorzugsweise durch Betätigung der Twistlock-Verriegelungen 220 auch in vertikaler Richtung.

Die frontseitige Sicherungseinrichtung 100 umfasst weiterhin den Frontauszug 13 und die am Frontbalken 102 angeordneten Sicherungselemente 130. Zur Sicherung des High-Cube-Containers sind die Sicherungsbolzen 133 nicht unmittelbar wirksam. Vielmehr erfolgt die Sicherung des High-Cube-Containers durch den Frontanschlag 110, der durch den Frontbalken 102 gebildet ist. Der Frontbalken 102 liegt also an der Vorderwand 22 des High-Cube-Containers an und bildet so einen Formschluss in Fahrtrichtung.

Um den High-Cube-Container auch quer zur Fahrtrichtung zu sichern, sind Queranschläge 111 vorgesehen, wobei die Queranschläge 111 durch den Rahmenhals 12 gebildet werden. Indem der Rahmenhals 12 in den Tunnel 23 eingreift, besteht ein Formschluss zwischen den Tunnelseitenwänden und dem Rahmenhals 12, so dass der High-Cube-Container quer zur Fahrtrichtung nicht wesentlich bewegbar ist. Zwar kann zwischen den Tunnelseitenwänden und dem Rahmenhals 12 ein Spiel bestehen. Dennoch ist der High-Cube-Container formschlüssig auf dem Trägerrahmen 10 gesichert, insbesondere auch in Querrichtung mittels des Rahmenhalses 12.

In Fahrzeuglängsrichtung ist der High-Cube-Container formschlüssig durch den Frontbalken 102 nach vorne und durch den Eingriff der Twistlock-Verriegelungen 220 an der heckseitigen Sicherungseinrichtung 200 nach hinten gesichert. Die frontseitige Sicherungseinrichtung 100 bewirkt jedoch keine formschlüssige Verbindung zwischen dem High-Cube-Container und dem Trägerrahmen 10 in vertikaler Richtung. Es hat sich gezeigt, dass eine solche formschlüssige Verbindung zur Erfüllung der gesetzlichen Vorschriften zur Ladungssicherung nicht erforderlich ist. Jedenfalls im Straßenverkehr reicht eine formschlüssige Sicherung in Fahrzeuglängsrichtung und in Fahrzeugquerrichtung aus. In vertikaler Richtung bewirkt die Gewichtskraft des Wechselaufbaus 20, insbesondere des High-Cube-Containers, dass eine den gesetzlichen Anforderungen ausreichende Sicherung besteht.

In Fig. 4 ist der Trägerrahmen 10 in einer Draufsicht gezeigt. Deutlich ist, dass der Hauptrahmen 11 des Trägerrahmens 10 zum Rahmenhals 12 hin eine Verjüngung 17 aufweist. Der Hauptrahmen ist durch zwei Längsträger 18 gebildet, deren Abstand zueinander im Bereich des Hauptrahmens 11 größer als im Bereich des Rahmenhalses 12 ist. Der Rahmenhals 12 ist also schmaler als der Hauptrahmen 11, so dass der Tunnel 23 eines Wechselaufbaus 20 entsprechend schmal gestaltet werden kann. Dies schafft im Wechselaufbau 20 größeren Laderaum.

In der Draufsicht ist auch gut zu erkennen, dass die heckseitige Sicherungseinrichtung 200, die am Heckauszug 14 angeordnet ist, den heckseitigen Querträger 201 umfasst, der an seinen Längsenden jeweils eine Twistlock-Verriegelung 220 trägt. Die frontseitige Sicherungseinrichtung 100, die den Frontauszug 13 umfasst, weist außerdem den als Frontbalken 102 ausgebildete Querbalken 120 auf, der an seinen Längsenden jeweils Sicherungselemente 130 trägt. Die Sicherungselemente 130 weisen eine Vorderfläche 131 und eine Rückfläche 132 auf, wobei die Vorderfläche 131 zur Rückfläche 132 hin gekrümmt verläuft. Damit wird sichergestellt, dass ein Durchschwenkradius zwischen dem Sattelauflieger und einer Sattelzugmaschine eingehalten wird. Durch die abgerundeten Sicherungselemente 130 kann der Frontbalken 102 näher an das Führerhaus der Sattelzugmaschine platziert werden, ohne dass es zu einer Kollision des Frontbalkens 102, insbesondere der Sicherungselemente 130 mit dem Führerhaus kommt, wenn zwischen der Sattelzugmaschine und dem Sattelauflieger ein kleiner Knickwinkel vorliegt.

Die frontseitige Sicherungseinrichtung 100 ist in Fig. 5 und 6 nochmals deutlicher erkennbar. Konkret umfasst die frontseitige Sicherungseinrichtung 100 mehrere Elemente. Ein Teil der frontseitigen Sicherungseinrichtung 100 ist der Rahmenhals 12, der die Queranschläge 111 für den Tunnel 23 eines Wechselaufbaus 20 bildet. Der Frontbalken 102 bildet einen weiteren Teil der frontseitigen Sicherungseinrichtung 100. Der Frontbalken 102 dient als Frontanschlag 110 für Wechselaufbauten 20, insbesondere High-Cube-Wechselaufbauten.

Das am Frontbalken 102 angeordnete Sicherungselement 130 ist mit seinem Sicherungsbolzen 133 ebenfalls Bestandteil der frontseitigen Sicherungseinrichtung 100 und ermöglicht eine Sicherung von Standard-ISO-Wechselaufbauten, die aufgrund ihrer geringeren Bauhöhe unmittelbar auf dem Rahmenhals 12 abgelegt werden können. Wie in Fig. 5 und 6 gut erkennbar ist, ist der Frontbalken 102 am Frontauszug 13 angeordnet, so dass der Abstand des Frontbalkens 102 vom Hauptrahmen 11 des Trägerrahmens 10 einstellbar ist.

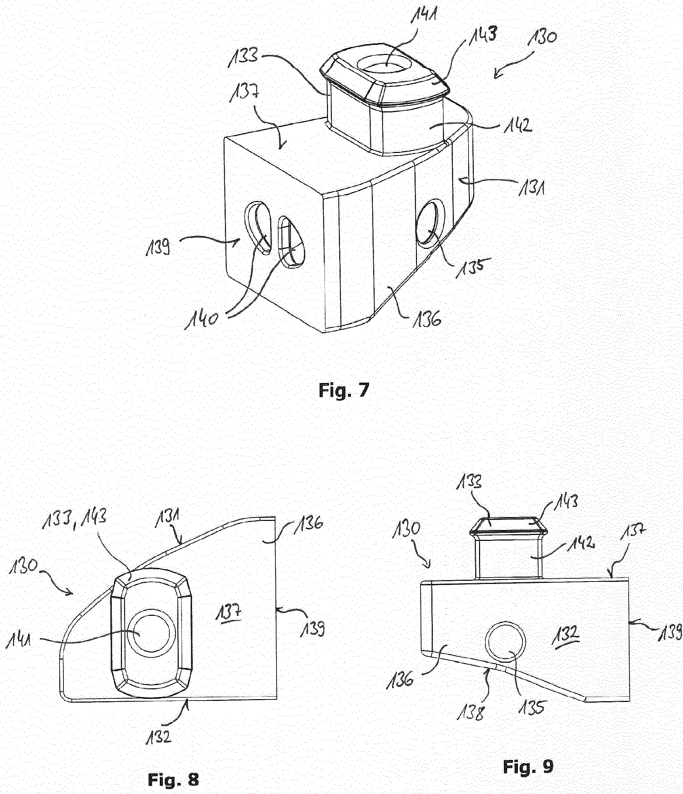

In den Fig. 7-9 ist ein Sicherungselement 130 für einen Trägerrahmen 10 eines Fahrzeuganhängers gezeigt. Das Sicherungselement 130 weist einen Grundkörper 136 und einen Sicherungsbolzen 133 auf. Der Grundkörper 136 umfasst eine Vorderfläche 131 und eine Rückfläche 132. Die Vorderfläche 131 und die Rückfläche 132 sind parallel zu einer Längsachse des Sicherungsbolzens 133 ausgebildet. Konkret sind die Vorderfläche 131 und die Rückfläche 132 durch eine Oberfläche 137 und eine Unterfläche 138 miteinander verbunden. Der Sicherungsbolzen 133 ist auf der Oberfläche 137 angeordnet und erstreckt sich parallel zur Rückfläche 132 bzw. Vorderfläche 131. Ferner erstreckt sich der Sicherungsbolzen 133 parallel zu einer Anlagefläche 139, die die Vorderfläche 131, die Rückfläche 132, die Oberfläche 137 und die Unterfläche 138 miteinander verbindet. Die Anlagefläche 139 dient zur Montage des Sicherungselements 130 an einem Frontbalken 102. Insbesondere kann das Sicherungselement 130 so mit dem Frontbalken 120 fluchtend an dessen Längsende befestigt werden. Dazu sind entsprechende Befestigungsöffnungen 140 vorgesehen.

Das Sicherungselement 130 wird vorzugsweise derart am Frontbalken 102 montiert, dass die Vorderfläche 131 in Fahrtrichtung eines Fahrzeuganhängers nach vorne weist. Da die Vorderfläche 131 gekrümmt ist, wie dies besonders in Fig. 8 erkennbar ist, wird ein gesetzlich und technisch vorgegebener Durchschwenkradius zwischen einem Sattelauflieger und einer Sattelzugmaschine eingehalten.

Der Sicherungsbolzen 133 ist vorzugsweise fest, insbesondere stoffschlüssig, mit dem Grundkörper 136 verbunden. Insbesondere kann der Sicherungsbolzen 133 mit dem Grundkörper 136 einstückig bzw. monolithisch ausgebildet sein. So kann das gesamte Sicherungselement 130 beispielsweise als Gussteil gebildet sein.

Der Sicherungsbolzen 133 umfasst einen Stamm 142 und einen Pilzkopf 143. Der Stamm 142 verbindet den Pilzkopf 143 mit dem Grundkörper 136. Der Pilzkopf 143 weist einen größeren Umfang als der Stamm 142 auf. Allerdings ist der Pilzkopf 143 derart dimensioniert, dass er im Wesentlichen mit Spiel in eine Verriegelungsaufnahme eines Wechselaufbaus eingeführt werden kann. Der Pilzkopf 143 bewirkt also keine Hinterschneidung, durch die der Wechselaufbau formschlüssig in vertikaler Richtung gehalten wird. Vielmehr vermeidet der Pilzkopf, dass durch mehrfaches Be- und Entladen mit einem Wechselaufbau der Stamm 142 verschmutzt oder abgenutzt wird, so ist sichergestellt, dass der Sicherungsbolzen 132 seine bestimmungsgemäße Funktion dauerhaft beibehält. Im Pilzkopf 143 kann außerdem eine Vertikalöffnung 141 vorgesehen sein. Die Vertikalöffnung 141 dient einerseits zur Gewichtsersparnis und ermöglicht es außerdem, zusätzliche Zapfen oder Stifte in den Sicherungsbolzen 133 einzubringen.

Die Höhe des Sicherungsbolzens 133 ist ausreichend groß gewählt, so dass der Wechselaufbau 20, der durch Unebenheiten im Fahrbahnbelag während des Transports gegebenenfalls aufgrund von vertikalen Beschleunigungskräften vom Trägerrahmen 10 leicht angehoben wird, weiterhin in horizontaler Richtung formschlüssig verbunden bleibt. Ein etwaiges Springen des Wechselaufbaus 20 auf dem Trägerrahmen 10 soll also nicht dazu führen, dass der Wechselaufbau 20 über den Sicherungsbolzen 133 hinwegspringt. Dazu ist der Sicherungsbolzen 133 entsprechend lang gewählt. Die Länge des Sicherungsbolzens 133 ist jedoch durch die Tiefe der Eckbeschläge bzw. Verriegelungsaufnahmen 21 der Wechselaufbauten 20 begrenzt.

Der Grundkörper 136 weist unterhalb des Sicherungsbolzens 133 eine Durchgangsöffnung 135 auf. Die Durchgangsöffnung 135 erstreckt sich von der Vorderfläche 131 zur Rückfläche 132. Wenn das Sicherungselement 133 bei einem High-Cube-Wechselaufbau eingesetzt wird, dient die Rückfläche 132 als Anschlag für die Vorderwand 22 des Wechselaufbaus. Insbesondere für den Transport auf einem Schiff kann nach freiem Ermessen des Transportpersonals ein zusätzlicher Bolzen durch die Durchgangsöffnung 135 geführt werden, um das Sicherungselement 130 zusätzlich für eine vertikale formschlüssige Verbindung mit einem Eckbeschlag des High-Cube-Wechselaufbaus herzustellen. Der Bolzen wird dann durch die Durchgangsöffnung 135 bis in den Eckbeschlag des Wechselaufbaus 20 geführt und verhindert so ein Abheben des Wechselaufbaus 20 vom Trägerrahmen 10.

### Bezugszeichenliste

- 10: Trägerrahmen
- 11: Hauptrahmen
- 12: Rahmenhals
- 13: Frontauszug
- 14: Heckauszug
- 15: Königszapfen
- 16: Kröpfung
- 17: Verjüngung
- 18: Längsträger
- 20: Wechselaufbau
- 21: Verriegelungsaufnahme
- 22: Vorderwand
- 23: Tunnel
- 100: frontseitige Sicherungseinrichtung
- 102: Frontbalken
- 110: Frontanschlag
- 111: Queranschlag
- 120: Querbalken
- 130: Sicherungselement
- 131: Vorderfläche
- 132: Rückfläche
- 133: Sicherungsbolzen
- 135: Durchgangsöffnung
- 136: Grundkörper
- 137: Oberfläche
- 138: Unterfläche
- 139: Anlagefläche
- 140: Befestigungsöffnung
- 141: Vertikalöffnung
- 142: Stamm
- 143: Pilzkopf
- 200: heckseitige Sicherungseinrichtung
- 210: heckseitiger Querträger
- 220: Twist-Lock-Verriegelung

## Patentansprüche

1. Trägerrahmen (10) eines Fahrzeuganhängers mit einer Vorrichtung zum Sichern von Wechselaufbauten (20) unterschiedlicher Bauart, insbesondere Wechselbrücken oder Transportcontainern, auf dem Trägerrahmen (10), wobei der Trägerrahmen (10) wenigstens eine heckseitige Sicherungseinrichtung (200) und wenigstens eine frontseitige Sicherungseinrichtung (100) aufweist, und wobei die heckseitige Sicherungseinrichtung (200) so angepasst ist, dass zur Sicherung eines Wechselaufbaus (20) auf dem Trägerrahmen (10) ein Formschluss in horizontaler und in vertikaler Richtung herstellbar ist,
**dadurch gekennzeichnet, dass**
die frontseitige Sicherungseinrichtung (100) so angepasst ist, dass zur Sicherung des Wechselaufbaus (20) ein Formschluss ausschließlich in horizontaler Richtung herstellbar ist.

2. Trägerrahmen nach Anspruch 1,
**dadurch gekennzeichnet, dass**
die frontseitige Sicherungseinrichtung (100) so angepasst ist, dass der Wechselaufbau (20) in vertikaler Richtung frei beweglich ist.

3. Trägerrahmen nach Anspruch 1 oder 2,
**dadurch gekennzeichnet, dass**
die frontseitige Sicherungseinrichtung (100) einen Frontanschlag (110) und/oder zwei Queranschläge (111) bildet.

4. Trägerrahmen nach Anspruch 3,
**dadurch gekennzeichnet, dass**
die Queranschläge (111) durch einen Rahmenhals (12) des Trägerrahmens (10) gebildet sind.

5. Trägerrahmen nach Anspruch 3 oder 4,
**dadurch gekennzeichnet, dass**
der Frontanschlag (110) durch einen Querbalken (120) des Trägerrahmens (10) gebildet ist.

6. Trägerrahmen nach Anspruch 5,
**dadurch gekennzeichnet, dass**
der Querbalken (120) wenigstens einen vertikalen, insbesondere starren, Sicherungsbolzen (133) aufweist, der zum vertikalen Eingriff in eine Verriegelungsaufnahme (21) des Wechselaufbaus (20) angepasst ist.

7. Trägerrahmen (10) nach einem der vorhergehenden Ansprüche,
**dadurch gekennzeichnet, dass**
das frontseitige Sicherungselement (130) einen Grundkörper (136) und einen auf dem Grundkörper (136) angeordneten Sicherungsbolzen (133) aufweist, der zum formschlüssigen Eingriff in eine Verriegelungsaufnahme (21) eines Wechselaufbaus (20), insbesondere einer Wechselbrücke oder eines Transportcontainers, insbesondere eines ISO-Containers, ausgebildet ist, und wobei der Grundkörper (136) eine Vorderfläche (131) und eine Rückfläche (132) aufweist, die parallel zu einer Längsachse des Sicherungsbolzens (133) ausgerichtet sind, und wobei das frontseitige Sicherungselement (130) frei von beweglichen Teilen zur Verriegelung mit einem Wechselaufbau (20) ist.

8. Trägerrahmen (10) nach Anspruch 7,
**dadurch gekennzeichnet, dass**
die Vorderfläche (131) zur Rückfläche (132) hin gekrümmt ist und/oder der Sicherungsbolzen (133) starr, insbesondere stoffschlüssig oder monolithisch, mit dem Grundkörper (136) verbunden ist.

9. Trägerrahmen (10) nach einem der vorhergehenden Ansprüche,
**gekennzeichnet durch**,
einen Frontbalken (102) mit wenigstens einem frontseitigen Sicherungselement (130), insbesondere zwei frontseitigen Sicherungselementen (130), wobei die Vorderfläche (131) des Sicherungselements (130), insbesondere die Vorderflächen (131) der Sicherungselemente (130), in Fahrtrichtung nach vorne ausgerichtet ist.

10. Trägerrahmen (10) nach Anspruch 9,
**dadurch gekennzeichnet, dass**
der Sicherungsbolzen (133) vertikal nach oben ausgerichtet ist und/oder die Rückfläche (132) des frontseitigen Sicherungselements (130) und/oder eine Rückfläche (132) des Frontbalkens (102) einen Frontanschlag (110) für einen Wechselaufbau (20), insbesondere einen High-Cube-Container, bildet.

11. Verwendung eines Trägerrahmens (10) nach Anspruch 1, wobei die frontseitige Sicherungseinrichtung (100) des Trägerrahmens (10) zur Sicherung eines Wechselaufbaus (20) auf dem Trägerrahmen (10) mittels einer formschlüssigen Verbindung verwendet wird, wobei eine Sicherung des Wechselaufbaus (20) mittels der frontseitigen Sicherungseinrichtung (100) auf dem Trägerrahmen (10) in vertikaler Richtung ausschließlich durch die Gewichtskraft des Wechselaufbaus (20) erfolgt.

12. Verfahren zum Sichern eines Wechselaufbaus (20), insbesondere einer Wechselbrücke oder eines Transportcontainers, insbesondere eines ISO-Containers, auf einem Trägerrahmen (10) eines Fahrzeuganhängers nach Anspruch 1, wobei der Wechselaufbau (20) mit der heckseitigen Sicherungseinrichtung (200) in horizontaler und vertikaler Richtung formschlüssig mit dem Trägerrahmen (10) und mit der frontseitigen Sicherungseinrichtung (100) nur in horizontaler Richtung formschlüssig verbunden wird.

13. Verfahren nach Anspruch 12,
**dadurch gekennzeichnet, dass**
der Wechselaufbau (20) im Bereich der frontseitigen Sicherungseinrichtung (100) in vertikaler Richtung ausschließlich kraftschlüssig, insbesondere gewichtskraftschlüssig, mit dem Trägerrahmen (10) verbunden wird.

## Claims

1. A support frame (10) of a vehicle trailer having a device for securing interchangeable structures (20) of different designs, in particular swap bodies or transport containers, on the support frame (10), wherein the support frame (10) has at least one tail-side securing means (200) and at least one front-side securing means (100), and wherein the tail-side securing means (200) is adapted such that a form fit in the horizontal and vertical directions can be produced in order to secure an interchangeable structure (20) on the support frame (10),
**characterised in that**
the front-side securing means (100) is adapted such that a form fit solely in the horizontal direction can be produced in order to secure the interchangeable structure (20).

2. The support frame according to Claim 1,
**characterised in that**
the front-side securing means (100) is adapted such that the interchangeable structure (20) is freely movable in the vertical direction.

3. The support frame according to Claim 1 or 2,
**characterised in that**
the front-side securing means (100) forms a front stop (110) and/or two transverse stops (111).

4. The support frame according to Claim 3,
**characterised in that**
the transverse stops (111) are formed by a frame neck (12) of the support frame (10).

5. The support frame according to Claim 3 or 4,
**characterised in that**
the front stop (110) is formed by a crossbar (120) of the support frame (10).

6. The support frame according to Claim 5,
**characterised in that**
the crossbar (120) has at least one vertical, in particular rigid, securing bolt (133), which is adapted for vertical engagement in a locking receptacle (21) of the interchangeable structure (20).

7. The support frame (10) according to one of the preceding claims,
**characterised in that**
the front-side securing element (130) has a main body (136) and a securing bolt (133), which is arranged on the main body (136) and is designed for form-fitting engagement in a locking receptacle (21) of an interchangeable structure (20), in particular a swap body or a transport container, in particular an ISO container, and wherein the main body (136) has a front face (131) and a rear face (132), which are oriented parallel to a longitudinal axis of the securing bolt (133), and wherein the front-side securing element (130) is free of movable parts for locking with an interchangeable structure (20).

8. The support frame (10) according to Claim 7,
**characterised in that**
the front face (131) is curved towards the rear face (132), and/or the securing bolt (133) is connected rigidly, in particular integrally or monolithically, to the main body (136).

9. The support frame (10) according to one of the preceding claims,
**characterised by**
a front bar (102) with at least one front-side securing element (130), in particular two front-side securing elements (130), wherein the front face (131) of the securing element (130), in particular the front faces (131) of the securing elements (130), is oriented forwards in the direction of travel.

10. The support frame (10) according to Claim 9,
**characterised in that**
the securing bolt (133) is oriented vertically upwards, and/or the rear face (132) of the front-side securing element (130) and/or a rear face (132) of the front bar (102) forms a front stop (110) for an interchangeable structure (20), in particular a high cube container.

11. The use of a support frame (10) according to Claim 1, wherein the front-side securing means (100) of the support frame (10) is used to secure an interchangeable structure (20) on the support frame (10) by means of a form-fitting connection, wherein securing of the interchangeable structure (20) by means of the front-side securing means (100) on the support frame (10) in the vertical direction is effected solely by the weight force of the interchangeable structure (20).

12. A method for securing an interchangeable structure (20), in particular a swap body or a transport container, in particular an ISO container, on a support frame (10) of a vehicle trailer according to Claim 1, wherein the interchangeable structure (20) is connected to the support frame (10) form-fittingly in the horizontal and vertical directions with the tail-side securing means (200) and form-fittingly only in the horizontal direction with the front-side securing means (100).

13. The method according to Claim 12,
**characterised in that**
the interchangeable structure (20) is connected to the support frame (10) solely force-fittingly, in particular weight-force-fittingly, in the vertical direction in the region of the front-side securing means (100).

## Revendications

1. Châssis porteur (10) d'une remorque de véhicule, pourvu d'un dispositif destiné à sécuriser des caisses mobiles (20) de différentes conceptions, notamment des ponts interchangeables ou de conteneurs de transport sur le châssis porteur (10),
le châssis porteur (10) comportant au moins un système de sécurisation (200) côté arrière et au moins un système de sécurisation (100) côté frontal et le système de sécurisation (200) côté arrière étant adapté de telle sorte, que pour sécuriser une caisse mobile (20) sur le châssis porteur (10), une complémentarité de forme puisse être établie dans la direction horizontale et dans la direction verticale,
**caractérisé en ce que**
le système de sécurisation (100) côté frontal est adapté de telle sorte, que pour la sécurisation de la caisse mobile (20), une complémentarité de forme puisse être établie exclusivement dans la direction horizontale.

2. Châssis porteur selon la revendication 1,
**caractérisé en ce que**
le système de sécurisation (100) côté frontal est adapté de telle sorte, que la caisse mobile (20) soit librement déplaçable dans la direction verticale.

3. Châssis porteur selon la revendication 1 ou 2,
**caractérisé en ce que**
le système de sécurisation (100) côté frontal constitue une butée frontale (110) et / ou deux butées transversales (111).

4. Châssis porteur selon la revendication 3,
**caractérisé en ce que**
les butées transversales (111) sont constituées par un col de châssis (12) du châssis porteur (10).

5. Châssis porteur selon la revendication 3 ou 4,
**caractérisé en ce que**
la butée frontale (110) est constituée par une traverse (120) du châssis porteur (10).

6. Châssis porteur selon la revendication 5,
**caractérisé en ce que**
la traverse (120) comporte au moins une goupille de sécurisation (133) verticale, notamment rigide, qui est adaptée pour un engagement vertical dans un logement de verrouillage (21) de la caisse mobile (20).

7. Châssis porteur (10) selon l'une quelconque des revendications précédentes,
**caractérisé en ce que**
l'élément de sécurisation (130) côté frontal comporte un corps de base (136) et une goupille de sécurisation (133) placée sur le corps de base (136), qui est conçue pour un engagement par complémentarité de forme dans un logement de verrouillage (21) d'une caisse mobile (20), notamment d'un pont mobile ou d'un conteneur de transport, notamment d'un conteneur ISO et le corps de base (136) comportant une surface avant (131) et une surface arrière (132), qui sont orientées à la parallèle d'un axe longitudinal de la goupille de sécurisation (133) et l'élément de sécurisation (130) côté frontal étant libre de pièces déplaçables pour le verrouillage avec une caisse mobile (20).

8. Châssis porteur (10) selon la revendication 7,
**caractérisé en ce que**
la surface avant (131) est incurvée vers la surface arrière (132) et / ou la goupille de sécurisation (133) est assemblée de manière rigide, notamment par conjugaison de matières ou de manière monolithique avec le corps de base (136).

9. Châssis porteur (10) selon l'une quelconque des revendications précédentes,
**caractérisé par**
une poutre frontale (102), pourvue d'au moins un élément de sécurisation (130) côté frontal, notamment de deux éléments de sécurisation (130) côté frontal, la surface avant (131) de l'élément de sécurisation (130), notamment les surfaces avant (131) des éléments de sécurisation (130) étant orientée(s) vers l'avant dans la direction de déplacement.

10. Châssis porteur (10) selon la revendication 9,
**caractérisé en ce que**
la goupille de sécurisation (133) est orientée à la verticale vers le haut et / ou la surface arrière (132) de l'élément de sécurisation (130) côté frontal et / ou un surface arrière (132) de la poutre frontale (102) constitue une butée frontale (110) pour une caisse mobile (20), notamment un conteneur High-Cube.

11. Utilisation d'un châssis porteur (10) selon la revendication 1, le système de sécurisation (100) côté frontal du châssis porteur (10) étant utilisé pour la sécurisation d'une caisse mobile (20) sur le châssis porteur (10) au moyen d'un assemblage par complémentarité de forme, une sécurisation de la caisse mobile (20) au moyen du système de sécurisation (100) côté frontal sur le châssis porteur (10) en direction verticale s'effectuant exclusivement par la force de pesanteur de la caisse mobile (20).

12. Procédé, destiné à sécuriser une caisse mobile (20), notamment d'un pont interchangeable ou d'un conteneur de transport, notamment d'un conteneur ISO sur un châssis porteur (10) d'une remorque de véhicule selon la revendication 1, lors duquel, avec le système de sécurisation (200) côté arrière, l'on assemble la caisse mobile (20) par complémentarité de forme dans la direction horizontale et verticale et avec le système de sécurisation (100) côté frontal, uniquement dans la direction horizontale avec le châssis porteur (10).

13. Procédé selon la revendication 12,
**caractérisé en ce que**
dans la zone du système de sécurisation (100) côté frontal, l'on assemble la caisse mobile (20) avec le châssis porteur (10) dans la direction verticale exclusivement par complémentarité de force, notamment par force de pesanteur.
